# EUROPÄISCHE PATENTANMELDUNG

(11) **EP 4 726 348 A1**
(43) Veröffentlichungstag der Anmeldung: **15.04.2026**
(21) Anmeldenummer: 25206068.6
(22) Anmeldetag: 01.10.2025
(51) Int. Cl.: G01L 9/00, G01L 27/00

(54) **VERFAHREN ZUR FUNKTIONSÜBERWACHUNG EINES DRUCKMESSGERÄTS UND DRUCKMESSGERÄT**

(30) Priorität: 09.10.2024 DE 102024129151
(71) Anmelder: ifm electronic gmbh, 45128 Essen (DE)
(72) Erfinder: Beschorner, Kai, 88214 Ravensburg (DE); Heep, Jonathan, 88250 Weingarten (DE)
(74) Vertreter: Ifm Patentabteilung

(57) **Zusammenfassung**

Die Erfindung betrifft ein Verfahren zur Funktionsüberwachung eines Druckmessgeräts mit einem Messelement (1) aus einem Halbleitersubstrat (2) und einer aus wenigstens einer piezo-resistiven Widerstandsbahn bestehenden Messbrücke, wobei das Halbleitersubstrat (2) eine n-leitende Schicht und eine p-leitende Schicht aufweist und mit der p-leitenden Schicht vier erste Anschlusspads (10, 20, 30, 40) zur elektrischen Kontaktierung der Messbrücke verbunden sind.

Erfindungsgemäß ist wenigstens eine der vier für die Kontaktierung der Messbrücke vorgesehenen elektrischen Leitungen (3) mit einer Schaltereinheit (4) verbunden, die dazu eingerichtet ist, zwischen einem Druckmessmodus und einem Diagnosemodus umzuschalten, und das Halbleitersubstrat (2) weist ein weiteres Anschlusspad (50) auf, das mit der n-leitenden Schicht verbunden ist. Ein Mikrocontroller (5) ist dazu eingerichtet, eine Durchlassspannung zwischen der n-leitenden und der p-leitenden Schicht zu erfassen, indem er an einem Punkt P mit wenigstens einer der vier elektrischen Leitungen (3) verbunden ist und im Diagnosemodus die zwischen diesem Punkt P und dem weiteren Anschlusspad (50) abfallende Spannung misst.

Darüber hinaus betrifft die Erfindung ein Druckmessgerät zur
Funktionsüberwachung.

## Beschreibung

Die Erfindung betrifft ein Verfahren zur Funktionsüberwachung eines Druckmessgeräts gemäß dem Oberbegriff des Anspruchs 1 sowie ein Druckmessgerät gemäß dem Oberbegriff des Anspruchs 7.

Druckmessgeräte bzw. Drucksensoren werden zur Überwachung und Messung des Systemdrucks in hydraulischen und pneumatischen Applikationen eingesetzt. Ein Einsatzbereich solcher Druckmessgeräte ist beispielsweise die Lebensmittelindustrie, in der der Druck verschiedener Medien, insbesondere verschiedener Flüssigkeiten überwacht oder gemessen wird. Dabei gibt es je nach Anwendungsgebiet eine Vielzahl unterschiedlicher Ausführungsvarianten, wobei sich der Aufbau und die Auslegung der Druckmessgeräte in Abhängigkeit des erwarteten maximalen Nenndrucks des zu überwachenden Mediums unterscheiden.

Typischerweise bestehen derartige Druckmessgeräte aus einem metallischen Prozessanschluss zur mechanischen Verbindung des Messgeräts mit dem das Medium beinhaltenden Behältnis und einem auf dem Prozessanschluss aufgesetzten Gehäuse, das im Wesentlichen die Auswerteelektronik beinhaltet. Des Weiteren ist eine zumeist metallische oder keramische Druckmesszelle zur Umwandlung des zu überwachenden Drucks mittels eines elektromechanischen Wandlers in ein proportionales Messsignal vorgesehen. Die Druckmesszelle weist zumindest eine auslenkbare Messmembran auf, deren eine Seite mit dem Medium in Kontakt steht und auf deren anderen, vom Medium abgewandten Seite der elektromechanische Wandler angeordnet ist.

Eine Möglichkeit der Druckerfassung ist die Nutzung des so genannten piezo-resistiven Effekts. Hierfür besteht das Messelement zur Erfassung des Druckes aus einem Halbleitersubstrat, bevorzugt aus Silizium, und einer Messbrücke mit wenigstens einer piezo-resistiven Widerstandsbahn. Das Halbleitersubstrat weist dabei eine n-leitende und eine p-leitende Schicht auf. Typischerweise sind auf der p-leitenden Schicht zur elektrischen Kontaktierung der Messbrücke vier Anschlusspads angeordnet.

Hierfür werden häufig sehr empfindliche elektrische Leitungen, wie bspw. Bonddrähte verwendet. Um eine Unterbrechung dieser Leitungen feststellen zu können, hat man bspw. einen redundanten Aufbau mittels eines zweiten Messelements vorgesehen oder die Reaktion des Messelements durch eine zusätzliche LED überprüft.

Das Dokument DE 10 2021 104 607 A1 offenbart einen Drucksensor und ein zugehöriges Betriebsverfahren, um mit einem einzigen Sensorelement einen erweiterten Messbereich abzudecken. Dies wird erreicht, indem der Sensor zwischen mindestens zwei Betriebsmodi umgeschaltet wird, wobei in jedem Modus durch eine unterschiedliche elektrische Verschaltung der Elektroden eine jeweils andere Messkapazität zur Erfassung eines bestimmten Druckbereichs gebildet wird.

Aufgabe der Erfindung ist es, eine zuverlässige Überprüfung der unterbrechungsfreien Kontaktierung des für die Druckmessung vorgesehenen Messelements zu ermöglichen.

Die Aufgabe wird erfindungsgemäß durch ein Verfahren mit den Merkmalen des Anspruchs 1 sowie durch ein Druckmessgerät mit den Merkmalen des Anspruchs 7 gelöst. Vorteilhafte Ausgestaltungen der Erfindung sind in den Unteransprüchen angegeben.

Ausgangspunkt der Erfindung ist die Druckerfassung anhand des so genannten piezo-resistiven Effekts. Hierfür besteht das Messelement zur Erfassung des Druckes aus einem Halbleitersubstrat, bevorzugt aus einem Silizium-Chip, und einer Messbrücke mit wenigstens einer piezo-resistiven Widerstandsbahn. Das Halbleitersubstrat weist dabei eine n-leitende und eine p-leitende Schicht auf. Auf der p-leitenden Schicht sind zur elektrischen Kontaktierung der Messbrücke vier erste Anschlusspads angeordnet.

Erfindungsgemäß ist wenigstens eine der vier für die Kontaktierung der Messbrücke vorgesehenen elektrischen Leitungen mit einer vorzugsweise als Multiplexer ausgebildeten Schaltereinheit verbunden, die dazu eingerichtet ist, zwischen einem Druckmessmodus und einem Diagnosemodus umzuschalten. Des Weiteren weist das Halbleitersubstrat ein weiteres Anschlusspad auf, das mit der n-leitenden Schicht verbunden ist. Zwischen den p- und n-Dotierungen hat das Halbleitersubstrat eine parasitäre Diodenstrecke (Body Diode), die bei der Druckmessung nicht verwendet wird. Die Erfindung macht sich nun diese Diodenstrecke zu Nutze, um damit die unterbrechungsfreie Kontaktierung des für die Druckmessung vorgesehenen Messelements zu überprüfen. Hierzu erfasst ein Mikrocontroller eine Durchlassspannung zwischen der n-leitenden und der p-leitenden Schicht, indem er an einem Punkt P mit wenigstens einer der vier elektrischen Leitungen verbunden ist und im Diagnosemodus die zwischen diesem Punkt P und dem weiteren Anschlusspad abfallende Spannung misst.

Dazu wird das Halbleitersubstrat auf das niedrigste Potential gesetzt und an einem der vier ersten Anschlusspads, die mit der p-dotierten Schicht verbundenen sind, ein Konstantstrom oder -spannung eingespeist. So kann die Durchlassspannung der Diodenstrecke gemessen werden. Ist die Verbindung zwischen einem der Anschlusspads unterbrochen, lässt sich diese Spannung nicht mehr messen. Darüber ist bestimmbar, welche Verbindung unterbrochen ist und ob ein Fehler des Chips oder dessen Verbindung zur Auswertelektronik.

Vorteilhafte Weiterbildungen der Erfindung sehen vor, dass die Schaltereinheit von dem Mikrocontroller gesteuert wird bzw. dass der Mikrocontroller jeweils mit allen vier elektrischen Leitungen verbunden ist. Durch die Steuerung der als Multiplexer ausgebildeten Schaltereinheit kann der Mikrocontroller im Diagnosemodus sequenziell jede der vier elektrischen Leitungen auswählen und einzeln überprüfen. Dies ermöglicht nicht nur die Feststellung, dass eine Unterbrechung vorliegt, sondern auch die präzise Identifizierung, welche der vier Leitungen fehlerhaft ist, was die Fehlerdiagnose erheblich verbessert.

Erfindungsgemäß umfasst in einem zweiten Aspekt das Druckmessgerät neben dem Messelement mit seinem Halbleitersubstrat eine Schaltereinheit, ein zusätzliches Anschlusspad für die n-leitende Schicht des Substrats und einen Mikrocontroller. Die Schaltereinheit ist dazu eingerichtet, zwischen dem normalen Druckmessmodus und einem Diagnosemodus umzuschalten. Der Mikrocontroller ist so konfiguriert, dass er im Diagnosemodus die Spannung zwischen einer der Leitungen zur p-leitenden Schicht und dem neuen Anschlusspad der n-leitenden Schicht misst. Diese Anordnung nutzt die inhärente parasitäre Diodenstrecke des Halbleitersubstrats, um durch Messung der Durchlassspannung die Integrität der elektrischen Kontaktierung des Messelements zu überprüfen.

In einer bevorzugten Ausgestaltung des Druckmessgeräts ist die Schaltereinheit als Multiplexer ausgebildet. Der Vorteil dieser Implementierung liegt in der effizienten und raumsparenden Realisierung der Umschaltfunktion zwischen den verschiedenen elektrischen Leitungen. Ein Multiplexer erlaubt es, mit einer vergleichsweise geringen Anzahl von Schaltkomponenten mehrere Leitungen sequenziell oder selektiv zu verbinden und zu trennen. Dies trägt zur Miniaturisierung des Geräts bei und reduziert die Komplexität der Schaltung, was wiederum die Herstellungskosten senken kann.

Eine weitere vorteilhafte Weiterbildung des Druckmessgeräts sieht vor, dass der Mikrocontroller dazu eingerichtet ist, die Schaltereinheit zu steuern. Dies ermöglicht eine vollständig automatisierte und präzise Kontrolle über den Wechsel zwischen dem Druckmessmodus und dem Diagnosemodus. Die Steuerung durch den Mikrocontroller gewährleistet eine exakte Zeitsteuerung der Diagnosezyklen, eine nahtlose Integration in die Gesamtsteuerung des Systems und die Möglichkeit, Diagnosetests ohne manuelles Eingreifen auszuführen, was die Betriebssicherheit und den Komfort erheblich steigert.

Besonders vorteilhaft ist eine Ausgestaltung, bei der der Mikrocontroller über die Schaltereinheit wahlweise mit jeder der vier elektrischen Leitungen verbindbar ist, um die Integrität jeder Leitung einzeln zu überprüfen. Dieser Ansatz ermöglicht eine äußerst präzise Fehlerlokalisierung. Im Falle einer Unterbrechung kann nicht nur festgestellt werden, dass ein Fehler vorliegt, sondern auch genau welche der Leitungen betroffen ist. Dies vereinfacht die Fehlersuche und Wartung erheblich, reduziert Ausfallzeiten und ermöglicht gezielte Reparaturen, was die Zuverlässigkeit des Druckmessgeräts und des übergeordneten Systems maßgeblich verbessert.

Um die Messung der Durchlassspannung im Diagnosemodus zu standardisieren und zu optimieren, ist vorgesehen, dass der Mikrocontroller dazu eingerichtet ist, einen Konstantstrom oder eine Konstantspannung an die Anschlusspads anzulegen. Die Verwendung eines konstanten Stroms oder einer konstanten Spannung während der Messung gewährleistet reproduzierbare und vergleichbare Messergebnisse. Dies führt zu einer zuverlässigeren Erkennung von Veränderungen in der Diodenkennlinie, die auf eine Unterbrechung oder Degradation der elektrischen Verbindungen hindeuten, und erhöht somit die Genauigkeit der Funktionsüberwachung.

In einer weiteren bevorzugten Ausführungsform besteht das Halbleitersubstrat aus Silizium, und/oder die elektrischen Leitungen sind als Bonddrähte ausgebildet. Silizium als Material für das Substrat bietet den Vorteil einer etablierten und kostengünstigen Fertigungstechnologie mit hervorragenden mechanischen und elektrischen Eigenschaften, die für präzise Drucksensoren ideal sind. Die Verwendung von Bonddrähten für die elektrischen Leitungen ist eine gängige und bewährte Methode zur Herstellung empfindlicher Verbindungen in Halbleiterbauelementen. Sie ermöglicht eine hohe Integrationsdichte und ist gut geeignet, die geringen Signalpegel der Messbrücke zuverlässig zu übertragen, trägt jedoch auch zu den potenziellen Fehlerquellen bei, die durch die vorliegende Erfindung überwacht werden.

Die Erfindung schafft damit ein Druckmessgerät mit einer integrierten Selbstüberwachungsfunktion, das eine signifikant erhöhte Betriebssicherheit und Zuverlässigkeit bietet. Ein wesentlicher Vorteil dieser Vorrichtung besteht darin, dass sie auf eine besonders elegante und ressourcenschonende Weise eine Diagnose der elektrischen Anbindung des Messelements ermöglicht. Anstatt auf aufwendige redundante Strukturen oder zusätzliche Sensorelemente zurückzugreifen, nutzt das erfindungsgemäße Druckmessgerät eine ohnehin vorhandene, aber im Normalbetrieb ungenutzte parasitäre Halbleiterstruktur innerhalb des Messelements. Durch eine intelligente Ansteuerung mittels eines Mikrocontrollers und einer Schaltereinheit wird diese Struktur gezielt für eine Diagnosemessung aktiviert. Dies erlaubt nicht nur die einfache Feststellung, dass ein Verbindungsfehler vorliegt, sondern ermöglicht auch eine präzise Identifizierung der fehlerhaften Leitung. Die Fähigkeit zur genauen Fehlerlokalisierung stellt einen erheblichen Fortschritt dar, da sie die Wartung vereinfacht und die Gesamtsicherheit des Systems, in dem das Druckmessgerät eingesetzt wird, entscheidend verbessert.

Nachfolgend wird die Erfindung anhand von Ausführungsbeispielen unter Bezugnahme auf die Zeichnungen näher erläutert.

Es zeigen schematisch:
- Figur 1: eine Draufsicht eines Messelements;
- Figur 2: Aufbau zur Durchführung des erfindungsgemäßen Verfahrens.

Bei der nachfolgenden Beschreibung der bevorzugten Ausführungsformen bezeichnen gleiche Bezugszeichen gleiche oder vergleichbare Komponenten.

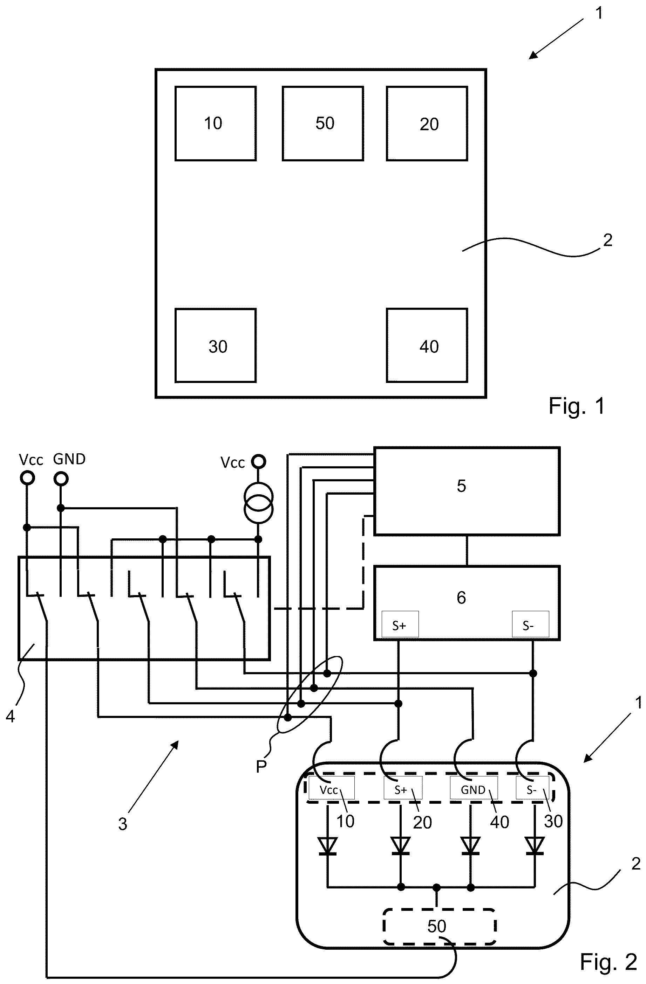

In der sehr schematischen Darstellung in Figur 1 ist ein erfindungsgemäßes Messelement 1 in Draufsicht dargestellt, welches auf der Membran einer Druckmesszelle zur Erfassung des Drucks eines flüssigen, fließfähigen oder gasförmigen Mediums angeordnet ist. Es besteht im Wesentlichen aus einem Halbleitersubstrat 2 mit einer n-leitenden Schicht und einer p-leitenden Schicht. Vier der fünf dargestellten Anschlusspads 10, 20, 30, 40 sind mit der p-leitenden Schicht verbunden. Zwischen diesen vier Anschlusspads 10, 20, 30, 40 sind in der Figur nicht weiter gezeigte piezo-resistive Widerstandsbahnen angeordnet, die zusammen eine Messbrücke bilden. Die Anschlusspads 10, 20, 30, 40 dienen der elektrischen Kontaktierung dieser Messbrücke. Ein einwirkender Druck bewirkt eine Durchbiegung der Membran, was durch eine Widerstandsänderung der piezo-resistive Widerstandsbahnen 4 erfassbar und mithilfe der Messbrücke auswertbar ist. Dieses Messprinzip ist soweit bekannt.

Das Halbleitersubstrat 2 weist nun ein weiteres Anschlusspad 50 auf, das mit der n-leitenden Schicht verbunden ist. Zwischen diesem weiteren Anschlusspad 50 und einem der vier ersten Anschlusspads 10, 20, 30, 40 ist ein Mikrocontroller 5 anschließbar, der dazu eingerichtet ist, eine Durchlassspannung zwischen der n-leitenden und der p-leitenden Schicht zu erfassen und damit die Feststellung einer unterbrechungsfreien Kontaktierung des Messelements 1 ermöglicht.

In Figur 2 ist exemplarisch ein Aufbau gezeigt, womit das erfindungsgemäße Verfahren durchgeführt werden kann. die zentralen Elemente für die Druckmessung sind zunächst das Messelement 1 sowie eine mit dem Messelement 1 verbundene Auswerteeinheit 6. Darüber hinaus ist das Messelement 1 mit der Versorgungsspannung Vcc und Masse GND verbunden.

Wie bereits erwähnt besteht das Messelement 1 im Wesentlichen aus einem als Chip ausgebildeten Halbleitersubstrat 2 mit einer n-leitenden Schicht und einer p-leitenden Schicht. Das Halbleitersubstrat 2 umfasst eine nicht weiter dargestellte Messbrücke aus vier piezo-resistiven Widerstandsbahnen mit den Anschlüssen 10, 20, 30, 40, welche über die in Fig. 1 gezeigten Anschlusspads kontaktierbar sind. Die Kontaktierung erfolgt dabei jeweils über eine empfindliche Bondverdrahtung, was durch die halbkreisförmige Form der Leitung gekennzeichnet sein soll.

Für die zuverlässige Überprüfung der Verdrahtung ist jetzt ein Mikrocontroller 5 sowie eine als Multiplexer ausgeführte Schaltereinheit 4 vorgesehen. Auf die Darstellung von entsprechenden Anschlüssen für die Versorgung des Mikrocontrollers 5 sowie zum Abgriff der Messsignale bspw. zur Weiterleitung an eine übergeordnete Steuereinheit (SPS) wurde verzichtet.

Zum einen steuert der Mikrocontroller 5 die Schaltereinheit 4, was durch die gestrichelte Verbindungslinie dargestellt werden soll, und kann so zwischen einem Druckmessmodus und einem Diagnosemodus umzuschalten. Dabei findet im Druckmessmodus die Druckmessung statt, während im Diagnosemodus, in dem die eigentliche Druckmessung für die Dauer der Diagnose kurzzeitig pausiert wird, die Überprüfung der unterbrechungsfreien Kontaktierung des Messelements 1 erfolgt. Hierfür vergleicht der Mikrocontroller 5 die gemessene Diodenspannung mit einem erwarteten Schwellenwert, um einen Fehler, beispielsweise eine Unterbrechung der Leitung, zuverlässig festzustellen.

Jeweils zwischen den Anschlüssen 10, 20, 30, 40 und dem weiteren Anschluss 50 ist die Diodenstrecke durch ein entsprechendes Symbol verdeutlicht. Die Erfassung der über diese Diodenstrecke abfallende Durchlassspannung erfolgt über den Mikrocontroller 5, indem er an einem Punkt P, der signaltechnisch zwischen der Schaltereinheit 4 und dem Mikrocontroller 5 liegt (siehe ovale Einkreisung), mit wenigstens einer der vier elektrischen Leitungen 3 verbunden ist und die zwischen diesem Punkt P und dem weiteren Anschlusspad 50 abfallende Spannung misst.

### Bezugszeichenliste

- 1: Messelement
- 2: Halbleitersubstrat
- 3: elektrischen Leitung
- 4: Schaltereinheit, Multiplexer
- 5: Mikrocontroller
- 6: Auswerteeinheit
- 10: Anschlusspad Vcc
- 20: Anschlusspad S+
- 30: Anschlusspad S-
- 40: Anschlusspad GND
- 50: Anschlusspad Substrat

## Patentansprüche

1. Verfahren zur Funktionsüberwachung eines Druckmessgeräts zur Erfassung des Drucks eines flüssigen, fließfähigen oder gasförmigen Mediums, umfassend eine Druckmesszelle mit einer auslenkbaren Messmembran, deren eine Seite mit dem Medium in Kontakt steht und auf einer von dem Medium abgewandten zweiten Seite ein Messelement (1) angeordnet ist, durch den der zu überwachende Druck in ein proportionales Messsignal umgewandelt wird,
wobei das Messelement (1) aus einem Halbleitersubstrat (2) und einer Messbrücke mit wenigstens einer piezo-resistiven Widerstandsbahn besteht, wobei das Halbleitersubstrat (2) eine n-leitende Schicht und eine p-leitende Schicht aufweist und mit der p-leitenden Schicht vier erste Anschlusspads (10, 20, 30, 40) zur elektrischen Kontaktierung der Messbrücke verbunden sind,
**dadurch gekennzeichnet,**
**dass** wenigstens eine der vier für die Kontaktierung der Messbrücke vorgesehenen elektrischen Leitungen (3) mit einer Schaltereinheit (4) verbunden ist, die dazu eingerichtet ist, zwischen einem Druckmessmodus und einem Diagnosemodus umzuschalten,
und **dass** das Halbleitersubstrat (2) ein weiteres Anschlusspad (50) aufweist, das mit der n-leitenden Schicht verbunden ist,
wobei ein Mikrocontroller (5) dazu eingerichtet ist, eine Durchlassspannung zwischen der n-leitenden und der p-leitenden Schicht zu erfassen, indem er an einem Punkt P mit wenigstens einer der vier elektrischen Leitungen (3) verbunden ist und im Diagnosemodus die zwischen diesem Punkt P und dem weiteren Anschlusspad (50) abfallende Spannung misst.

2. Verfahren nach Anspruch 1,
**dadurch gekennzeichnet, dass** die Schaltereinheit als Multiplexer ausgebildet ist.

3. Verfahren nach einem der vorhergehenden Ansprüche,
**dadurch gekennzeichnet, dass** die Schaltereinheit von dem Mikrocontroller (5) gesteuert wird.

4. Verfahren nach einem der vorhergehenden Ansprüche,
**dadurch gekennzeichnet, dass** der Mikrocontroller jeweils mit allen vier elektrischen Leitungen verbunden ist.

5. Verfahren nach einem der vorhergehenden Ansprüche,
**dadurch gekennzeichnet, dass** das Messen der Spannung im Diagnosemodus das Einspeisen eines Konstantstroms oder einer Konstantspannung in einen der vier ersten Anschlusspads (10, 20, 30, 40) umfasst.

6. Verfahren nach einem der vorhergehenden Ansprüche,
weiterhin umfassend den Schritt des Bestimmens, ob eine Unterbrechung in einer der elektrischen Leitungen (3) vorliegt, basierend auf der gemessenen Spannung.

7. Druckmessgerät zur Funktionsüberwachung, insbesondere zur Durchführung des Verfahrens nach einem der vorherigen Ansprüche,
umfassend eine Druckmesszelle mit einer auslenkbaren Messmembran, deren eine Seite dazu eingerichtet ist, mit einem Medium in Kontakt zu stehen, und auf deren von dem Medium abgewandten zweiten Seite ein Messelement (1) angeordnet ist, um den zu überwachenden Druck in ein proportionales Messsignal umzuwandeln,
wobei das Messelement (1) aus einem Halbleitersubstrat (2) und einer aus wenigstens einer piezo-resistiven Widerstandsbahn bestehenden Messbrücke besteht,
wobei das Halbleitersubstrat (2) eine n-leitende Schicht und eine p-leitende Schicht aufweist und mit der p-leitenden Schicht vier erste Anschlusspads (10, 20, 30, 40) zur elektrischen Kontaktierung der Messbrücke verbunden sind,
**gekennzeichnet durch**:
- eine Schaltereinheit (4), die mit wenigstens einer der vier für die Kontaktierung der Messbrücke vorgesehenen elektrischen Leitungen (3) verbunden und dazu eingerichtet ist, zwischen einem Druckmessmodus und einem Diagnosemodus umzuschalten,
- ein weiteres Anschlusspad (50) am Halbleitersubstrat (2), das mit der n-leitenden Schicht verbunden ist,
- und einen Mikrocontroller (5), der dazu eingerichtet ist, eine Durchlassspannung zwischen der n-leitenden und der p-leitenden Schicht zu erfassen, indem er an einem Punkt P mit wenigstens einer der vier elektrischen Leitungen (3) verbunden ist und im Diagnosemodus die zwischen diesem Punkt P und dem weiteren Anschlusspad (50) abfallende Spannung misst.

8. Druckmessgerät nach Anspruch 7,
**dadurch gekennzeichnet, dass** die Schaltereinheit (4) als Multiplexer ausgebildet ist.

9. Druckmessgerät nach Anspruch 7 oder 8,
**dadurch gekennzeichnet, dass** der Mikrocontroller (5) dazu eingerichtet ist, die Schaltereinheit (4) zu steuern.

10. Druckmessgerät nach einem der Ansprüche 7 bis 9,
**dadurch gekennzeichnet, dass** der Mikrocontroller (5) über die Schaltereinheit (4) wahlweise mit jeder der vier elektrischen Leitungen (3) verbindbar ist, um die Integrität jeder Leitung einzeln zu überprüfen.

11. Druckmessgerät nach einem der Ansprüche 7 bis 10,
**dadurch gekennzeichnet, dass** der Mikrocontroller (5) dazu eingerichtet ist, im Diagnosemodus einen Konstantstrom oder eine Konstantspannung an einen der vier ersten Anschlusspads (10, 20, 30, 40) anzulegen, um die Durchlassspannung zu messen.

12. Druckmessgerät nach einem der Ansprüche 7 bis 11,
**dadurch gekennzeichnet, dass** das Halbleitersubstrat (2) aus Silizium besteht und/oder die elektrischen Leitungen (3) als Bonddrähte ausgebildet sind.
